# EUROPÄISCHE PATENTSCHRIFT

(11) **EP 2 850 025 B1**
(45) Veröffentlichungstag und Bekanntmachung des Hinweises auf die Patenterteilung: **28.03.2018**
(21) Anmeldenummer: 13728937.7
(22) Anmeldetag: 17.04.2013
(51) Int. Cl.: B65G 53/46, C10J 3/40, C10J 3/30, B01J 3/02, F23J 1/00, F23K 3/16

(54) **SCHLEUSE FÜR KOHLEDRUCKVERGASUNGSANLAGEN**
LOCK FOR PRESSURIZED COAL GASIFICATION PLANTS
SAS POUR INSTALLATIONS DE GAZÉIFICATION DE CHARBON SOUS PRESSION

(30) Priorität: 14.05.2012 DE 102012009515
(43) Veröffentlichungstag der Anmeldung: 25.03.2015
(73) Patentinhaber: Stahl- und Apparatebau Hans Leffer GmbH & Co. KG, 66125 Saarbrücken (DE)
(72) Erfinder: LEFFER, Hans, Georg, 66123 Saarbrücken (DE)
(74) Vertreter: Patentanwälte Bernhardt / Wolff Partnerschaft mbB
(86) Internationale Anmeldenummer: PCT/DE2013/100140
(87) Internationale Veröffentlichungsnummer: WO 2013/170850

(56) Entgegenhaltungen:
- DE-A1- 2 657 742
- DE-A1- 3 229 841
- DE-C- 924 767
- DE-U- 1 917 347

## Beschreibung

Die Erfindung betrifft eine Schleuse für den Abzug von Asche aus einem oder die Zufuhr von Kohle in einen unter Druck stehenden Gaserzeuger einer Kohlevergasungsanlage, mit einer Schleusenkammer sowie einem Mechanismus zum Öffnen und Schließen der Schleusenkammer.

Solche, durch Benutzung bekannte Schleusen ermöglichen trotz Innendruck eine kontrollierte Öffnung des Gaserzeugers, indem vor einer Entnahme von Asche oder einer Zufuhr von Kohle der Druck in der Schleusenkammer dem Druck im Gaserzeuger angeglichen wird.
Es versteht sich, dass derartige Schleusen hohen Belastungen unterliegen und insbesondere deren Dichtungssitze und Verschlusselemente langfristig sowohl hohen Temperaturbelastungen als auch mechanischen und chemischen Verschleißbeanspruchungen standhalten müssen. Die DE2657742 beschreibt eine Schleuseneinrichtung, geeignet für den Abzug von Asche aus einem unter Druck stehenden Gaserzeuger, wobei die Schleuseneinrichtung über einen Verschlusskopf und einen Stielteil verfügt. Die Schleuse wird hydraulisch geöffnet und geschlossen.

Bei der aus DE 1 917 347 U bekannten Schleuse sind wesentliche Teile des Öffnungs-/ Schließmechanismus, insbesondere Einrichtungen zur Bewegung eines Verschlusselements, in der Schleusenkammer untergebracht und Elemente zur Verbindung dieser Teile mit einem Antrieb sind aus der Schleusenkammer herausgeführt.
Die Befestigung der genannten Teile durch Einschweißen innerhalb der Schleusenkammer erfordert einen sehr hohen Fertigungsaufwand, insbesondere die Verwendung komplizierter Hilfseinrichtungen und Schablonen. Die eingeschweißten Bauteile müssen nach dem Spannungsarmglühen, das für die ein Druckgefäß bildende Schleusenkammer unerlässlich ist, noch mechanisch bearbeitet werden, z.B. auf einem Bohrwerk.
Nachteilig mindern die Einbauten ferner das Nutzvolumen der Schleusenkammer. Komplizierte, fest eingeschweißte Einbauten verhindern oder erschweren zudem die Aufbringung eines Korrosionsschutzes in der Schleusenkammer. Die Kosten für die Wartung der Einbauten sind extrem hoch, indem hierfür jeweils die komplette Schleuse aus der Anlage entfernt und in eine spezielle Instandhaltungswerkstatt gebracht werden muss. Um die unmittelbar dem Verschluss dienenden Teile zu warten, bedarf es jeweils des Abbaus des gesamten Öffnungs-/Schließmechanismus.
Sämtliche Einbauten der bekannten Schleusen sind darüber hinaus Belastungen durch Erosion ausgesetzt, indem sie im Flussbereich des durch die Schleuse hindurchtretenden Materials liegen.

Der Erfindung liegt die Aufgabe zugrunde, eine Schleuse der eingangs genannten Art zu schaffen, die sich gegenüber den bekannten derartigen Schleusen mit geringerem Aufwand herstellen lässt und einen geringeren Wartungsaufwand erfordert.

Die diese Aufgabe lösende Schleuse nach der Erfindung ist dadurch gekennzeichnet, dass eine zwischen der Schleusenkammer und dem Gaserzeuger montierbare Baugruppe in der Art eines Ventils vorgesehen ist, welche den Öffnungs-/Schließmechanismus aufweist, der ein bewegbares Verschlusselement und Einrichtungen zur Bewegung des Verschlusselements umfasst, wobei das Verschlusselement eine einseitig offene Hülse aufweist, die auf einem axial in die Hülse hineinragenden Bolzen geführt ist.

Vorteilhaft sind die wesentlichen Teile des Öffnungs-/ Schließmechanismus in einer gesonderten, komplett montierbaren Baugruppe konzentriert, die sich mit deutlich verringertem Aufwand herstellen und zu Wartungszwecken in ihrer Gesamtheit bequem demontieren lässt. In der Schleusenkammer als solcher wird für den Öffnungs-/Schließmechanismus kein Platz mehr benötigt. Der Innenraum der Schleusenkammer kann gänzlich frei von Teilen des Öffnungs-/ Schließmechanismus sein. Die kappenartige Hülse schirmt die Führung erfindungsgemäß ab.

Vorteilhaft kann der Öffnungs-/Schließmechanismus der Schleuse eine weitere solche Baugruppe aufweisen, die an einem dem Gaserzeuger abgewandten Aus- oder Einlass der Schleusenkammer montierbar ist. Die Baugruppe kann dementsprechend jeweils sowohl an der Kohleschleuse als auch der Ascheschleuse einer Kohledruckvergasungsanlage eingangs- und ausgangsseitig eingesetzt werden.

Zweckmäßig weist die Baugruppe ein Gehäuse mit je einem Flansch an einander gegenüberliegenden Seiten des Gehäuses zur Verbindung mit dem Gaserzeuger und der Schleusenkammer auf.

Das genannte Verschlusselement ist stempelartig mit einem Verschlusskopf und einem Stielteil ausgebildet. Der Stielteil weist eine einseitig offene Hülse auf, die auf einem axial in die Hülse hineinstehenden Bolzen beweglich und durch diesen geführt ist. Die Hülse schirmt den Führungsbolzen gegen das anströmende Material ab.
In einer zweckmäßigen Konstruktion steht der Führungsbolzen von einem Steg vor, welcher einander gegenüberliegende Wandabschnitte des Gehäuses miteinander verbindet. Zweckmäßig ist der im Materialstrom liegende Steg dünn, so dass er den Materialstrom nicht behindert und selbst keinem hohen Verschleiß unterliegt.
In weiterer vorteilhafter Ausgestaltung der Erfindung ist das Verschlusselement koaxial zu einem zylindrischen Teil des Gehäuses angeordnet. Eine solche Anordnung erlaubt bei gegebenen Abmessungen der Baugruppe einen größtmöglichen Durchlassquerschnitt.
Die genannten Einrichtungen zur Bewegung des Verschlusselements weisen zweckmäßig Gestängeelemente auf, die sich von dem Verschlusselement radial erstrecken.
Insbesondere ragen diese Gestängeelemente in radiale Aufweitungen des zylindrischen Teils des Gehäuses hinein, wobei die von dem Verschlusselement entfernteren Teile der Gestängeelemente zunehmend geringerer Belastung durch anströmendes Material und Temperatureinwirkung ausgesetzt sind.
In einer Ausführungsform sind die Gestängeelemente an das Verschlusselement angelenkte Schwenkhebel, die jeweils an ihrem dem Verschlusselement abgewandten Ende starr mit einer an dem Gehäuse gelagerten, aus dem Gehäuse herausgeführten Welle verbunden sind. Über ein Kurbelelement lässt sich diese Welle drehen, wobei die vorzugsweise über ein Langloch an das Verschlusselement angelenkten Schwenkhebel das Verschlusselement axial bewegen.

In einer alternativen Ausführungsform handelt es sich bei den Gestängeelementen um starr mit dem Verschlusselement verbundene Stangen, die an ihrem anderen Ende in starrer Verbindung mit einer parallel zum Verschlusselement bewegbaren, aus dem Gehäuse herausgeführten Zug-/Schubstange stehen.

Sowohl die vorangehend erwähnten Wellen als auch die Zug-/Schubstangen sind radial weit außen angeordnet, wo genügend Einbauraum für Antriebsmittel zur Verfügung steht.

Zweckmäßig ist das Gehäuse außenseitig mit wenigstens einem die Wellen über je ein Kurbelelement oder die Zug-/Schubstangen bewegenden Kraftzylinder verbunden.

Vorzugsweise weisen die dem Materialstrom ausgesetzten Teile einen dachförmigen Querschnitt mit einer dem Materialstrom entgegen gerichteten Dachspitze auf.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein erstes Ausführungsbeispiel für eine erfindungsgemäße Schleuse in geschnittenen Teilansichten (a) und (b),
- Fig. 2: eine Querschnittsansicht einer ventilartigen Baugruppe der Schleuse von Fig. 1,
- Fig. 3: eine Seitenansicht einer ventilartigen Baugruppe mit zwei Hydraulikzylindern,
- Fig. 4: ein weiteres Ausführungsbeispiel für eine Schleuse nach der Erfindung in geschnittenen Teilansichten (a) und (b),
- Fig. 5: eine Querschnittsansicht einer ventilartigen Baugruppe der Schleuse von Fig. 4,
- Fig. 6: ein Detail der Schleuse von Fig. 4, und
- Fig. 7: eine schematische Darstellung einer Kohledruckvergasungsanlage mit ventilartigen Baugruppen nach der Erfindung.

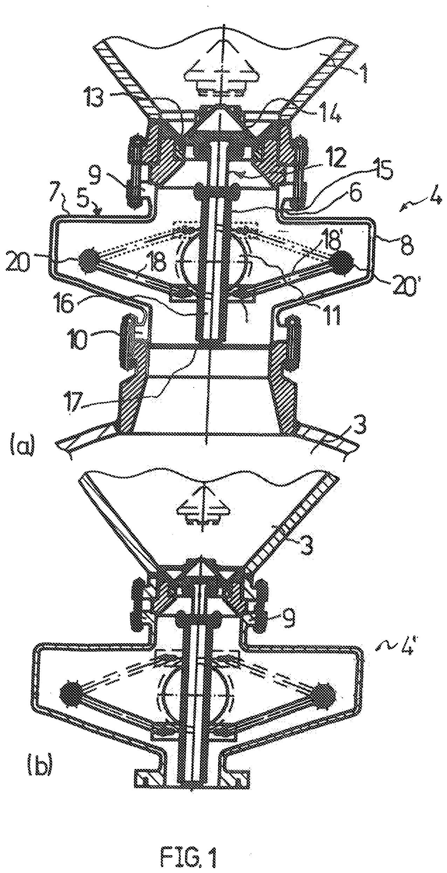

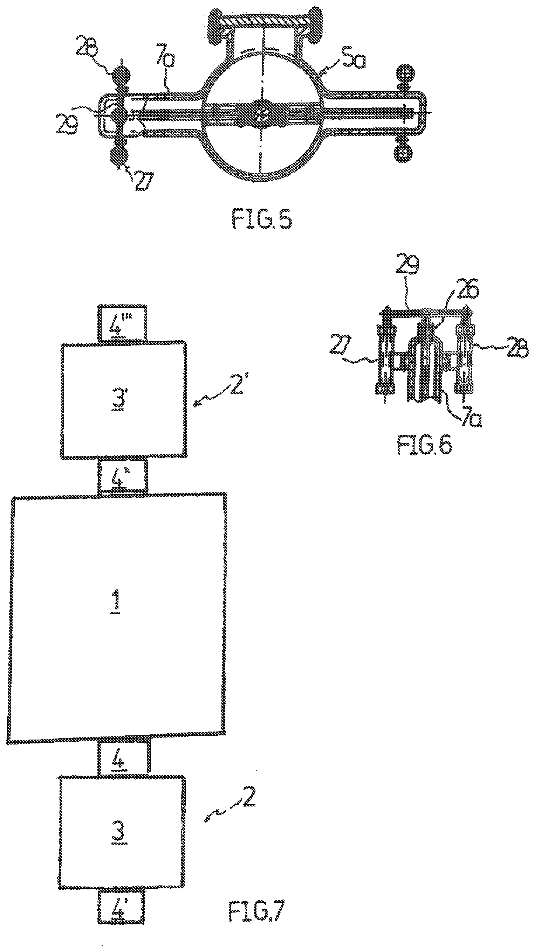

Eine in Fig. 7 in einem Grundschema dargestellte Kohledruckvergasungsanlage umfasst einen unter Druck stehenden Gaserzeuger 1, dem über eine Schleuse 2' von oben Kohle zuführbar ist. Eine weitere Schleuse 2 für den Abzug von Asche befindet sich an der Unterseite des Gaserzeugers. Jede der Schleusen 2,2' umfasst eine Schleusenkammer 3 bzw. 3'. Zwischen den Schleusenkammern 3,3' und dem Gaserzeuger 1 sowie am Eingang der Schleuse 2' und Ausgang der Schleuse 2 befindet sich jeweils eine Baugruppe 4,4',4" bzw. 4"', die wie ein Ventil arbeitet und nachfolgend anhand der Figuren 1 bis 6 beschrieben ist.

Fig. 1 zeigt Ausführungsbeispiele für die ventilartige Baugruppe 4 zwischen dem Gaserzeuger 1 und der Schleusenkammer 3 sowie ein Ausführungsbeispiel für eine ventilartige Baugruppe 4' am unteren Ende der Schleusenkammer 3, die im Wesentlichen der Baugruppe 4 entspricht.

Beide Baugruppen 4,4' weisen jeweils ein Gehäuse 5 mit einem rundzylindrischen Gehäuseteil 6 und radialen Aufweitungen 7 und 8 auf. Über Flansche 9 und 10 am rundzylindrischen Teil 6 des Gehäuses 5 ist die Baugruppe 4 mit dem Gaserzeuger 1 und der Schleusenkammer 3 verschraubt. Bei der Baugruppe 4' besteht eine Verschraubung zwischen dem entsprechenden Flansch 9 und der Schleusenkammer 3. Das Gehäuse 5 weist jeweils eine Inspektionsöffnung 11 auf.

Koaxial zu dem zylindrischen Teil 6 des Gehäuses 5 ist ein stempelartiges Verschlusselement 12 mit einem nach oben kegelförmigen Verschlusskopf 14 angeordnet, der in der in Fig. 1 gezeigten Position unter Abdichtung des Gaserzeugers 1 auf einem Verschlusssitz 13 auflegt. Der Verschlusskopf 14 ist mit einer zur Zylinderachse des zylindrischen Teils 6 des Gehäuses 5 koaxialen Schubstange verbunden, die in eine Hülse 15 übergeht und zusammen mit der Hülse den Stielteil des stempelartigen Verschlusselements 12 bildet. Die nach unten offene Hülse 15 ist auf einem Bolzen 16 in axialer Richtung bewegbar und durch den Bolzen 16 entsprechend geführt. Der Bolzen 16 steht in starrer Verbindung mit einem Quersteg 17, der einander gegenüberliegende Wandabschnitte des Gehäuses 5 miteinander verbindet.

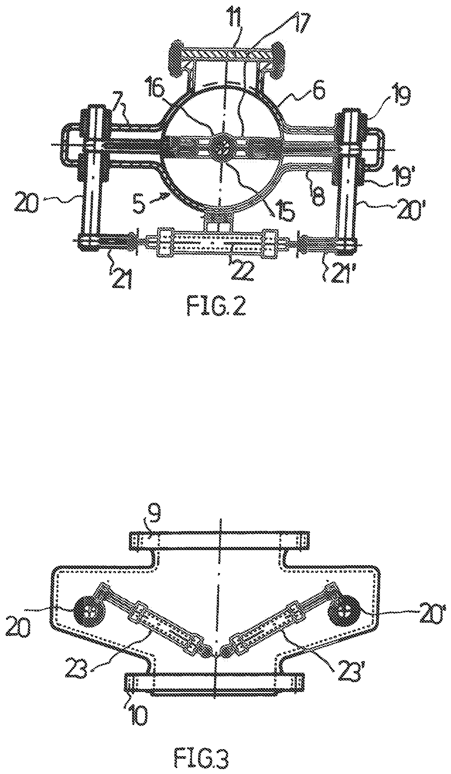

An Ausleger der Hülse 15 sind über Langlöcher mit je einem Ende Schwenkhebel 18 und 18' angelenkt, die an ihrem anderen Ende in starrer Verbindung mit einer Welle 20 bzw. 20' stehen. Die Wellen 20,20' sind, wie insbesondere Fig. 2 erkennen lässt, in Lagerungen 19 und 19' drehbar, die an zwei im Abstand einander gegenüberliegenden Wandabschnitten der Ausweitung 7 bzw. 8 mit dem Gehäuse 5 verbunden sind.

Wie Fig. 2 ferner erkennen lässt, stehen die Wellen 20,20' jeweils starr mit einer Kurbelstange 21 bzw. 21' in Verbindung. Über einen an die freien Enden der Kurbelstangen 21,21' angelenkten Hydraulikzylinder 22 lassen sich die Wellen 20,21 drehen und damit die Schwenkarme 18,18' unter Verschiebung des Verschlusselements 12 verdrehen.

Wie aus Fig. 3 hervorgeht, können anstelle eines Hydraulikzylinders 22 auch zwei getrennte, jeweils die Welle 20 bzw. 20' drehende Zylinder 23 und 23' eingesetzt werden.

Figur 1 lässt ferner erkennen, dass der Verschlusssitz 13 durch ein Ringelement 30 gebildet ist, welches zwischen dem Gaserzeuger 1 bzw. der Schleusenkammer 3 und dem jeweils mit diesen Teilen verbundenen Gehäuse 5 der Baugruppe 4 bzw. 4' festgelegt ist. Das Ringelement 30 besteht aus mehreren Einzelringen, die aus unterschiedlichen Materialien gefertigt sind und den Anforderungen hinsichtlich Festigkeit, Temperaturbeständigkeit und Dichtigkeit genügen.

Zum Abzug von Asche aus dem Gaserzeuger 1 werden mit Hilfe des Hydraulikzylinders 22 bzw. der beiden Zylinder 23,23' die Wellen 20,20' der Baugruppe 4 gedreht, so dass die Schwenkhebel 18,18' in die durch Strichlinien angedeutete Stellung verschwenken. Dabei bewegen sie axial das Verschlusselement 12, wodurch sich der Verschlusskopf 14 von dem Verschlusssitz 13 abhebt und in die durch Strichlinien angedeutete Stellung verschiebt.

Asche kann nun durch den frei gewordenen Durchgang aus dem Gaserzeuger 1 durch den zylindrischen Teil 6 des Gehäuses 5 hindurch in die Schleusenkammer 3 gelangen, deren Innendruck vorher dem im Gaserzeuger 1 herrschenden Druck angeglichen wurde.

Die nach oben kegelige Form des Verschlusskopfs 14 begünstigt den Aschefluss, ebenso die oberhalb des Verschlusssitzes 13 gebildeten Abschrägungen des Ringelements 30. Die Aufweitungen 7,8 weisen jeweils einen schrägen Boden auf, so dass am Durchgang seitlich austretende Asche von selbst zurück in den Hauptstrom gelangt. Die Hülse 15 deckt weite Teile des Bolzens 16 gegen den Aschestrom ab, so dass der Bolzen 16 als das Verschlusselement 12 führendes Teil keinem hohen Verschleiß unterliegt.

Die drehbaren Wellen 20,20' dichten das Gehäuse nach außen ab. Bei der Drehung gelangt keine Asche in die Bereich zwischen den Lagerungen 19,19' und der Welle 20 bzw. 20'.

Um die Schleusenkammer 3 zu entleeren, wird bei geschlossener Verbindung zwischen dem Gaserzeuger 1 und der Schleusenkammer 3 durch die Baugruppe 4 bei Außendruck in der Kammer 3 eine Öffnung am unteren Ende der Schleusenkammer 3 mit Hilfe der Baugruppe 4' hergestellt und sämtliche Asche aus der Schleusenkammer entlassen.

Im Wartungsfall werden die Baugruppen 4,4' jeweils als Ganzes demontiert und ggf. gegen eine bereits gewartete Baugruppe ausgetauscht.

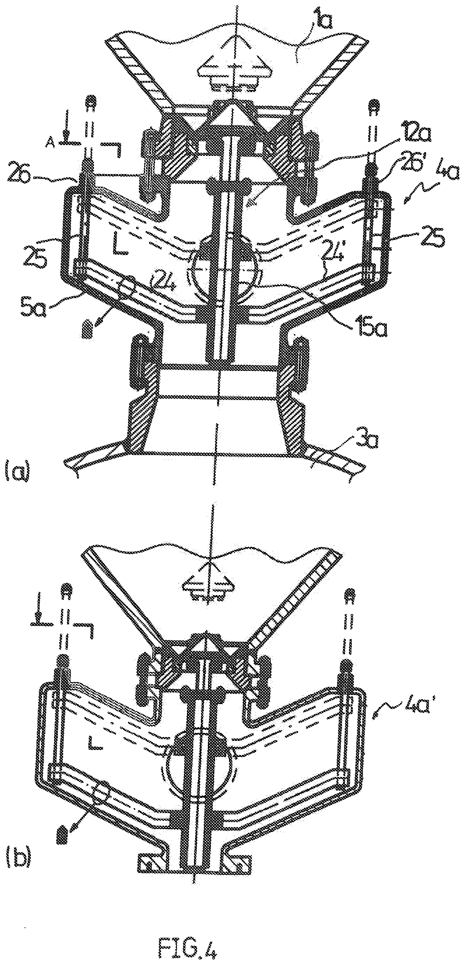

Bei dem in den Figuren 4 bis 6 gezeigten Ausführungsbeispiel sind gleiche oder gleichwirkende Teile mit derselben Bezugszahl wie bei dem vorangehenden Ausführungsbeispiel bezeichnet, wobei der betreffenden Bezugszahl der Buchstabe a beigefügt ist.

Das Ausführungsbeispiel gemäß Fig. 4 bis 6 unterscheidet sich von dem vorangehend beschriebenen Ausführungsbeispiel dadurch, dass an eine Hülse 15a eines Verschlusselements 12 nicht Schwenkhebel angelenkt sind, sondern die Hülse 15a starr über eine Verbindungsstange 24 bzw. 24' mit einer Zug-Schubstange 25 bzw. 25' verbunden ist. In einer mit einem Gehäuse 5a verbundenen Lagerung 26 bzw. 26' ist die Zug-Schubstange 25 bzw. 25' parallel zur Längsachse der Hülse 15a bewegbar.

Wie Figur 5 und 6 erkennen lassen, erfolgt die Bewegung der Zug-Schubstangen 25,25' jeweils mit Hilfe zweier Hydraulikzylinder 27,28, die an einer die Zug-/Schubstange 25,25' kreuzenden Querstange 29 angreifen.

## Patentansprüche

1. Schleuse (2,2') für den Abzug von Asche aus einem oder die Zufuhr von Kohle in einen unter Druck stehenden Gaserzeuger (1) einer Kohlevergasungsanlage, mit einer Schleusenkammer (3,3') sowie einem Öffnungs- und Schließmechanismus zum Öffnen und Schließen der Schleusenkammer, der eine zwischen der Schleusenkammer (3,3') und dem Gaserzeuger (1) zu montierende erste Baugruppe mit einem Verschlusselement (12) in der Art eines Ventils und Einrichtungen zur Bewegung des Verschlusselements (12) umfasst, wobei das Verschlusselement (12) stempelartig mit einem Verschlusskopf (14) und einem Stielteil ausgebildet ist,
**dadurch gekennzeichnet,**
**dass** der Stielteil eine an nur einem Ende offene Hülse (15) umfasst, die auf einem axial in die Hülse (15) hineinstehenden Bolzen (16) unter Abschirmung des Bolzens durch die Hülse (15) gegen anströmendes Material geführt ist.

2. Schleuse nach Anspruch 1,
**dadurch gekennzeichnet,**
**dass** der Öffnungs-/Schließmechanismus ferner eine solche Baugruppe (4',4"') aufweist, die an einem dem Gaserzeuger (1) abgewandten Aus- oder Einlass der Schleusenkammer (3,3') montierbar ist.

3. Schleuse nach Anspruch 1 oder 2,
**dadurch gekennzeichnet,**
**dass** die Baugruppe (4) ein Gehäuse (5) mit je einem Verbindungsflansch (9,10) an einander gegenüberliegenden Seiten aufweist.

4. Schleuse nach einem der Ansprüche 1-3 **dadurch gekennzeichnet,**
**dass** der Bolzen (16) von einem Steg (17) vorsteht, welcher einander gegenüberliegende Wandabschnitte des Gehäuses (5) miteinander verbindet.

5. Schleuse nach einem der Ansprüche 1 bis 4, **dadurch gekennzeichnet,**
**dass** das Verschlusselement (12) koaxial zu einem zylindrischen Teil (6) des Gehäuses (5) angeordnet ist.

6. Schleusen nach einem der Ansprüche 1 bis 5, **dadurch gekennzeichnet,**
**dass** die Einrichtung zur Bewegung des Verschlusselements (12) sich von dem Verschlusselement (12) radial erstreckende Gestängeelemente (18,24) aufweisen.

7. Schleuse nach Anspruch 6, **dadurch gekennzeichnet,**
**dass** die Gestängeelemente (18,24) in sich von dem zylindrischen Teil (6) des Gehäuses (5) radial erstreckender Aufweitungen (7,8) hineinragen.

8. Schleuse nach Anspruch 6 oder 7, **dadurch gekennzeichnet,**
**dass** die Gestängeelemente (18,24) an das Verschlusselement (12) angelenkte Schwenkhebel (18,18') umfassen, die an ihrem dem Verschlusselement abgewandten Ende starr mit einer an dem Gehäuse (5) gelagerten, aus dem Gehäuse (5) herausgeführten Welle (20,20') verbunden sind.

9. Schleuse nach einem der Ansprüche 6 bis 8, **dadurch gekennzeichnet,**
**dass** die Gestängeelemente (18,24) mit dem Verschlusselement (12) an einem Ende starr verbundene Stangen sind, die an ihrem anderen Ende in starrer Verbindung mit einer parallel zu dem Verschlusselement (12) bewegbaren, aus dem Gehäuse (5) herausgeführten Zug-/Schubstange (25,25') stehen.

10. Schleuse nach einem der Ansprüche 1 bis 9, **dadurch gekennzeichnet, dass** das Gehäuse (5) außenseitig mit wenigstens einem die Welle (20,20') über ein Kurbelelement (21,21') oder an die Zug-/Schubstange (25,25') über eine Querstange (29) bewegenden Kraftzylinder (22,23) verbunden ist.

## Claims

1. Lock (2, 2') for withdrawing ash from, or feeding coal into, a pressurized gas generator (1) of a coal-gasification plant, having a lock chamber (3, 3') and an opening and closing mechanism which is intended for opening and closing the lock chamber, and comprises a first subassembly with a closure element (12) in the manner of a valve, said subassembly being intended for installation between the lock chamber (3, 3') and the gas generator (1), and devices for moving the closure element (12), wherein the closure element (12) is designed in the manner of a stamper with a closure head (14) and a stem part,
**characterized**
**in that** the stem part comprises a sleeve (15) which is open at only one end and is guided on a bolt (16), which projects axially into the sleeve (15), the sleeve (15) shielding the bold against oncoming material.

2. Lock according to Claim 1,
**characterized**
**in that** the opening/closing mechanism also has such a subassembly (4, 4"') as can be installed at an outlet or inlet of the lock chamber (3, 3'), said outlet or inlet being directed away from the gas generator (1).

3. Lock according to Claim 1 or 2,
**characterized**
**in that** the subassembly (4) has a housing (5) with a respective connecting flange (9, 10) on mutually opposite sides.

4. Lock according to one of Claims 1-3,
**characterized**
**in that** the bolt (16) projects from a crosspiece (17), by means of which mutually opposite wall portions of the housing (5) are connected to one another.

5. Lock according to one of Claims 1 to 4,
**characterized**
**in that** the closure element (12) is arranged coaxially in relation to a cylindrical part (6) of the housing (5).

6. Lock according to one of Claims 1 to 5,
**characterized**
**in that** the devices for moving the closure element (12) have linkage elements (18, 24) extending radially from the closure element (12).

7. Lock according to Claim 6,
**characterized**
**in that** the linkage elements (18, 24) project into widened formations (7, 8) extending radially from the cylindrical part (6) of the housing (5).

8. Lock according to Claim 6 or 7,
**characterized**
**in that** the linkage elements (18, 24) comprise pivot levers (18, 18') which are articulated on the closure element (12) and, at their end which is directed away from the closure element, connected rigidly to a shaft (20, 20') which is mounted on the housing (5) and is led out of the housing (5).

9. Lock according to one of Claims 6 to 8,
**characterized**
**in that** the linkage elements (18, 24) are rods which are connected rigidly to the closure element (12) at one end and, at their other end, are connected rigidly to a pull/push rod (25, 25') which can be moved parallel to the closure element (12) and is led out of the housing (5).

10. Lock according to one of Claims 1 to 9,
**characterized**
**in that** the housing (5) is connected, on the outside, to at least one power cylinder (22, 23), which moves the shaft (20, 20') via a crank element (21, 21') or onto the pull/push rod (25, 25') via a transverse rod (29).

## Revendications

1. Sas (2,2') pour le soutirage de cendres ou pour l'alimentation en charbon d'un générateur de gaz (1) sous pression d'une installation de gazéification de charbon, présentant une chambre (3,3') de sas ainsi qu'un mécanisme d'ouverture et de fermeture pour ouvrir et fermer la chambre du sas, qui comprend un premier module à monter entre la chambre (3,3') du sas et le générateur de gaz (1), pourvu d'un élément de fermeture (12) sous forme d'une soupape et de dispositifs pour le déplacement de l'élément de fermeture (12), l'élément de fermeture (12) étant conçu sous forme de piston présentant une tête de fermeture (14) et une partie de tige, **caractérisé en ce que** la partie de tige présente une douille (15) ouverte sur seulement un côté, qui est guidée sur un boulon (16) enfoncé axialement dans la douille (15) tout en protégeant le boulon par la douille (15) contre le matériau qui afflue.

2. Sas selon la revendication 1, **caractérisé en ce que** le mécanisme d'ouverture/fermeture présente en outre un module (4',4"') qui peut être monté sur une sortie ou une entrée, opposée au générateur de gaz (1), de la chambre (3, 3') de sas.

3. Sas selon la revendication 1 ou 2, **caractérisé en ce que** le module (4) présente une enceinte (5) pourvue à chaque fois d'une bride d'assemblage (9,10) sur des côtés opposés l'un à l'autre.

4. Sas selon l'une quelconque des revendications 1-3, **caractérisé en ce que** le boulon (16) fait saillie à partir d'une entretoise (17), qui relie l'une à l'autre des sections de parois opposées l'une à l'autre de l'enceinte (5).

5. Sas selon l'une quelconque des revendications 1 à 4, **caractérisé en ce que** l'élément de fermeture (12) est disposé coaxialement par rapport à une partie cylindrique (6) de l'enceinte (5).

6. Sas selon l'une quelconque des revendications 1 à 5, **caractérisé en ce que** les dispositifs pour le déplacement de l'élément de fermeture (12) présente des éléments de tringle (18, 24) qui s'étendent radialement à partir de l'élément de fermeture (12).

7. Sas selon la revendication 6, **caractérisé en ce que** les éléments de tringle (18,24) pénètrent dans les élargissements (7, 8) s'étendant radialement à partir de la partie cylindrique (6) de l'enceinte (5).

8. Sas selon la revendication 6 ou 7, **caractérisé en ce que** les éléments de tringle (18, 24) comprennent des leviers pivotants (18, 18') articulés sur l'élément de fermeture (12), qui sont reliés au niveau de leur extrémité opposée à l'élément de fermeture, de manière rigide, à un arbre (20, 20') logé au niveau de l'enceinte (5) et guidé hors de l'enceinte (5).

9. Sas selon l'une quelconque des revendications 6 à 8, **caractérisé en ce que** les éléments de tringle (18, 24) sont des barres reliées en une extrémité de manière rigide à l'élément de fermeture (12) et reliées en leur autre extrémité, de manière rigide, à une barre de traction/poussée (25, 25') pouvant être déplacée parallèlement par rapport à l'élément de fermeture (12), guidée hors de l'enceinte (5).

10. Sas selon l'une quelconque des revendications 1 à 9, **caractérisé en ce que** l'enceinte (5) est reliée, côté externe, à au moins un vérin de puissance (22, 23) déplaçant l'arbre (20, 20') via un élément de manivelle (21, 21') ou au niveau de la barre de traction/poussée (25, 25') via une barre transversale (29).
